# FASCICULE DE BREVET EUROPEEN

(11) **EP 4 612 008 B1**
(45) Date de publication et mention de la délivrance du brevet: **02.12.2026**
(21) Numéro de dépôt: 23777317.1
(22) Date de dépôt: 03.10.2023
(51) Int. Cl.: B60L 15/20, B60L 50/10, B60L 50/51, B60L 3/00

(54) **PROCÉDÉ DE CALCUL DE CONSIGNES DE FONCTIONNEMENT D'UN PREMIER MOTEUR ET D'UN DEUXIÈME MOTEUR D'UN MÊME VÉHICULE**
VERFAHREN ZUR BERECHNUNG VON BETRIEBSSOLLWERTEN EINES ERSTEN MOTORS UND EINES ZWEITEN MOTORS DESSELBEN FAHRZEUGS
METHOD FOR CALCULATING OPERATING SETPOINTS OF A FIRST ENGINE AND A SECOND ENGINE OF THE SAME VEHICLE

(30) Priorité: 31.10.2022 FR 2211347
(43) Date de publication de la demande: 10.09.2025
(73) Titulaire: RENAULT s.a.s., 92100 Boulogne-Billancourt (FR)
(72) Inventeur: LE MAO, Loic, 78084 Guyancourt Cedex (FR); LE-NEEL, Pascal, 78084 Guyancourt Cedex (FR)
(74) Mandataire: Renault Group
(86) Numéro de dépôt international: PCT/EP2023/077335
(87) Numéro de publication internationale: WO 2024/094377

(56) Documents cités:
- US-A- 6 161 640
- US-A1- 2006 270 519

## Description

### Domaine Technique de l'invention

L'invention concerne un procédé de calcul de consignes de couple d'entraînement d'un premier moteur et d'un deuxième moteur d'un même véhicule, le deuxième moteur étant un moteur électrique comprenant un dispositif d'alimentation comprenant une bague et un balai frottant sur la bague.

### Etat de la technique antérieure

Certains véhicules, notamment certains véhicules automobiles, comprennent deux moteurs d'entraînement : un moteur principal et un moteur auxiliaire. Le moteur principal possède une puissance suffisante pour entrainer le véhicule lorsqu'un couple faible ou modéré est requis. Le moteur principal est, par exemple, suffisant puissant pour maintenir le véhicule automobile à une vitesse stabilisée sur autoroute et/ou pour conduire le véhicule sans forte accélération. Le moteur auxiliaire est un moteur électrique d'appoint, configuré pour offrir un surplus de puissance lorsque cela est nécessaire. Le moteur auxiliaire peut être par exemple activé pour aider le véhicule à franchir une côte et/ou pour réaliser une accélération plus importante, par exemple pour un dépassement ou dans le cadre d'une conduite sportive du véhicule.

Lorsque le couple d'entraînement requis est suffisamment bas pour être fourni par le moteur principal, seul celui-ci est activé afin d'obtenir un meilleur rendement énergétique. Dans de telles situations, le moteur auxiliaire n'est donc pas alimenté en énergie électrique. Toutefois, son rotor, lequel est en liaison mécanique avec des roues du véhicule, continue de tourner.

On connait par le document US 2006/270519 A1 un dispositif et une méthode de contrôle qui limitent la dégradation des gaz d'échappement d'un véhicule équipé d'un moteur et d'une seconde source d'énergie motrice qui assiste le moteur dans sa production de puissance. On connait par le document US 6 161 640 A un dispositif de sortie de puissance et une méthode d'arrêt du moteur principal dans le dispositif de sortie de puissance.

Pour réaliser le moteur auxiliaire, on connaît l'utilisation d'une machine synchrone à rotor bobiné. Pour être activé, le rotor d'un tel moteur électrique doit être alimenté en courant électrique. A cet effet, la machine synchrone à rotor bobiné comprend un dispositif d'alimentation électrique du rotor comprenant une bague et un balai frottant sur la bague. De tels moteurs présentent des performances avantageuses. Toutefois, il a été constaté que ces moteurs s'endommagent rapidement lorsque leur rotor tourne sans être alimenté en énergie électrique. Ainsi, lorsque le véhicule est utilisé sur une longue période selon une conduite ne nécessitant pas une activation du moteur auxiliaire, ce dernier peut être endommagé.

### Présentation de l'invention

Le but de l'invention est de fournir un procédé de calcul de consignes de fonctionnement d'un premier moteur et d'un deuxième moteur d'un même véhicule remédiant aux inconvénients ci-dessus et améliorant les procédés connus de l'art antérieur.

Plus précisément, un premier objet de l'invention est procédé de calcul de consignes de fonctionnement d'un premier moteur et d'un deuxième moteur d'un même véhicule permettant d'éviter l'endommagement du deuxième moteur.

### Résumé de l'invention

L'invention se rapporte à un procédé de calcul de consignes de fonctionnement d'un premier moteur et d'un deuxième moteur d'un même véhicule, le deuxième moteur étant un moteur électrique comprenant un rotor et un dispositif d'alimentation électrique du rotor, le dispositif d'alimentation comprenant au moins une bague et au moins un balai frottant sur l'au moins une bague, le procédé de calcul comprenant :
- une étape de calcul d'une épaisseur d'une patine formée en surface de ladite au moins une bague, puis
- une étape de comparaison de l'épaisseur de patine à un premier seuil, puis
- si l'épaisseur de patine est supérieure ou égale au premier seuil, une étape de calcul des consignes de fonctionnement du premier moteur et du deuxième moteur selon une première stratégie visant à optimiser la consommation énergétique du véhicule, et
- si l'épaisseur de patine est strictement inférieure au premier seuil, une étape de calcul des consignes de fonctionnement du premier moteur et du deuxième moteur selon une deuxième stratégie, distincte de la première stratégie, et visant à faire circuler un courant électrique dans ledit dispositif d'alimentation pour favoriser la régénération de la patine.

Ladite étape de calcul des consignes de fonctionnement du premier moteur et du deuxième moteur selon la deuxième stratégie peut comprendre le calcul d'une consigne de couple du deuxième moteur, la consigne de couple étant égale au minimum entre :
- un couple requis d'entraînement du véhicule,
- un couple maximum qu'est capable de fournir le deuxième moteur électrique, et
- un couple maximum permettant de conserver une trajectoire stable du véhicule.

L'épaisseur de patine peut être calculée de manière itérative en fonction d'une épaisseur de patine calculée lors d'une précédente itération de l'étape de calcul de l'épaisseur de patine, et en fonction d'une variation d'épaisseur de patine elle-même calculée en fonction de conditions d'utilisation du deuxième moteur.

Lesdites conditions d'utilisation du deuxième moteur peuvent comprendre:
- une donnée relative au régime du deuxième moteur,
- une donnée relative à un courant d'excitation du rotor du deuxième moteur, et
- une donnée relative à une température ambiante.

L'étape de calcul de l'épaisseur de patine peut comprendre:
- une sous-étape de calcul d'une température au niveau d'une interface entre l'au moins une bague et l'au moins un balais et/ou
- une sous-étape de calcul d'une hygrométrie au niveau d'une interface entre l'au moins une bague et l'au moins un balais.

Le premier moteur peut être configuré pour entraîner des roues avant du véhicule, et le deuxième moteur peut être configuré pour entraîner des roues arrière du véhicule.

Le procédé de calcul peut comprendre, consécutivement à l'étape de calcul des consignes de fonctionnement du premier moteur et du deuxième moteur selon la deuxième stratégie :
- une étape de calcul d'une deuxième épaisseur de patine formée en surface de ladite au moins une bague consécutivement à une période de fonctionnement du deuxième moteur selon la deuxième stratégie
- une étape de comparaison de la deuxième épaisseur de patine à un deuxième seuil strictement supérieur au premier seuil, puis
- si la deuxième épaisseur de patine est strictement supérieure au deuxième seuil, une étape de calcul des consignes de fonctionnement du premier moteur et du deuxième moteur selon la première stratégie.

Ladite étape de calcul des consignes de fonctionnement du premier moteur et du deuxième moteur selon la deuxième stratégie peut comprendre, si l'épaisseur de patine est strictement inférieure à un troisième seuil, une étape de calcul d'un courant d'alimentation du rotor et d'un courant d'alimentation d'un stator du deuxième moteur pour favoriser la régénération de la patine au détriment du rendement du deuxième moteur.

Le troisième seuil peut être égal au premier seuil, ou le troisième seuil peut être strictement inférieur au premier seuil.

L'invention se rapporte également à un véhicule automobile comprenant un premier moteur et un deuxième moteur, le deuxième moteur étant un moteur électrique comprenant un rotor et un dispositif d'alimentation électrique du rotor, le dispositif d'alimentation comprenant au moins une bague et au moins un balai frottant sur l'au moins une bague, le véhicule comprenant en outre des moyens matériels et logiciels configurés pour mettre en œuvre le procédé de calcul tel que défini précédemment.

L'invention se rapporte également à un produit programme d'ordinateur comprenant des instructions de code de programme enregistrées sur un support lisible par ordinateur pour mettre en œuvre les étapes du procédé de calcul tel que défini précédemment lorsque ledit programme fonctionne sur un ordinateur.

L'invention se rapporte également à un support d'enregistrement de données, lisible par un ordinateur, sur lequel est enregistré un programme d'ordinateur comprenant des instructions de code de programme de mise en œuvre du procédé de calcul tel que défini précédemment.

L'invention se rapporte également à un signal d'un support de données, portant le produit programme d'ordinateur tel que défini précédemment.

### Présentation des figures

Ces objets, caractéristiques et avantages de la présente invention seront exposés en détail dans la description suivante d'un mode de réalisation particulier fait à titre non-limitatif en relation avec les figures jointes parmi lesquelles :
La figure 1 est une vue schématique d'un véhicule automobile selon un mode de réalisation de l'invention.
La figure 2 est un schéma bloc d'un procédé de calcul de consignes de fonctionnement d'un premier moteur et d'un deuxième moteur d'un même véhicule selon un mode de réalisation de l'invention.
La figure 3 est un synoptique d'un procédé de calcul de consignes de fonctionnement d'un premier moteur et d'un deuxième moteur d'un même véhicule selon un mode de réalisation de l'invention.

### Description détaillée

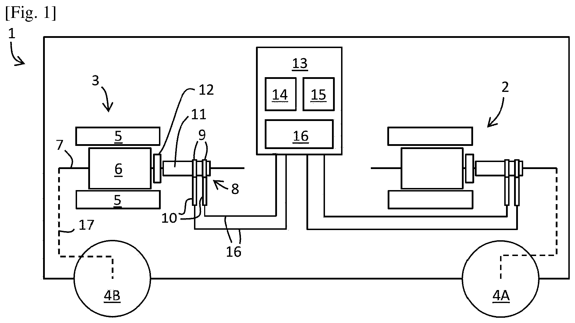

La figure 1 illustre schématiquement en vue de profil un véhicule 1 selon un mode de réalisation de l'invention. En particulier, le véhicule 1 est un véhicule automobile, par exemple un véhicule particulier, un véhicule utilitaire, un camion ou même un bus. Le véhicule 1 comprend deux moteurs 2, 3 aptes à entraîner en rotation des roues 4A, 4B du véhicule, de manière à le faire avancer. En l'espèce, un premier moteur 2 est couplé avec des roues avant 4A du véhicule et un deuxième moteur 3 est couplé avec des roues arrière 4B du véhicule. En variante, cette configuration pourrait être inversée, c'est-à-dire que le deuxième moteur 3 pourrait être couplé avec les roues avant et le premier moteur 2 pourrait être couplé avec les roues arrière. Selon d'autres variantes, tout autre couplage du premier moteur et du deuxième moteur avec tout ou partie des roues du véhicule pourrait être envisagé. Le premier moteur 2 peut être qualifié de moteur principal et le deuxième moteur 3 peut être qualifié de moteur auxiliaire. Le deuxième moteur peut être principalement destiné à fournir un surplus de couple d'entraînement au véhicule par exemple pour réaliser une forte accélération du véhicule.

Le deuxième moteur 3 est un moteur électrique comprenant un stator 5 et un rotor 6 monté rotatif par rapport au stator selon un axe de rotation 7. En particulier, le deuxième moteur 3 est une machine synchrone à rotor bobiné. Le rotor 6 du deuxième moteur 3 doit donc être alimenté en énergie électrique. A cet effet, le deuxième moteur comprend un dispositif d'alimentation 8 électrique comprenant au moins une bague 9 et au moins un balai 10, solidaire d'un carter du deuxième moteur 3, et frottant sur l'au moins une bague 9. En l'espèce, le dispositif d'alimentation 8 comprend deux bagues 9 et deux balais 10 frottant respectivement sur chacune des bagues. Les deux bagues 9 peuvent notamment être montées sur un arbre 11 solidaire du rotor 6, et supporté par un roulement 12. Les bagues 9 comprennent à leur surface une couche d'oxydation, généralement dénommée "patine", qui facilite le passage du courant entre la bague et le balais en diminuant une chute de tension. Cette patine peut notamment être formée lors d'une phase de rodage du deuxième moteur

Le véhicule 1 comprend en outre un dispositif de commande électronique 13 équipé d'une mémoire 14, d'un microprocesseur 15 et d'un étage de puissance 16. Le dispositif de commande électronique 13 est configuré pour fournir un courant électrique pour alimenter le rotor 6 selon une consigne calculée par le microprocesseur 15. Sur la figure 1, on a représenté par des lignes 16 en traits plein les liaisons électriques entre le dispositif de commande électronique 13 et les balais 10. On a également représenté par des lignes en pointillés 17 la liaison mécanique reliant les roues arrière 4B à l'arbre 7.

En complément, le stator 5 peut également être alimenté en énergie électrique par le dispositif de commande électronique 13. Un équilibre donné entre le courant d'alimentation du rotor et le courant d'alimentation du stator permet d'atteindre un rendement optimal du deuxième moteur 3.

Le premier moteur 2 peut également être un moteur électrique, et même également une machine synchrone à rotor bobiné. Le premier moteur 2 peut être analogue, voir même identique au deuxième moteur 3. Comme pour le deuxième moteur, le stator et le rotor du premier moteur peuvent être alimentés en énergie électrique par le dispositif de commande électronique 13. Le rotor du premier moteur 2 est relié mécaniquement au roues avant 4A.

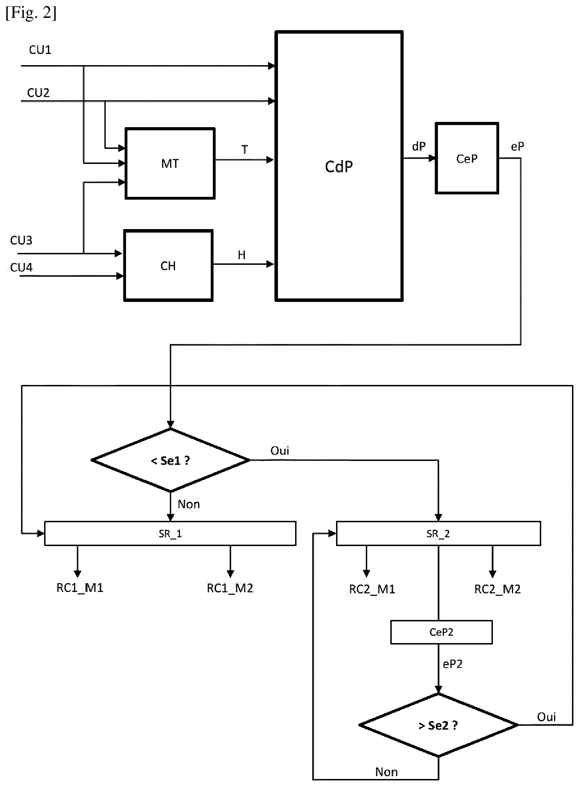

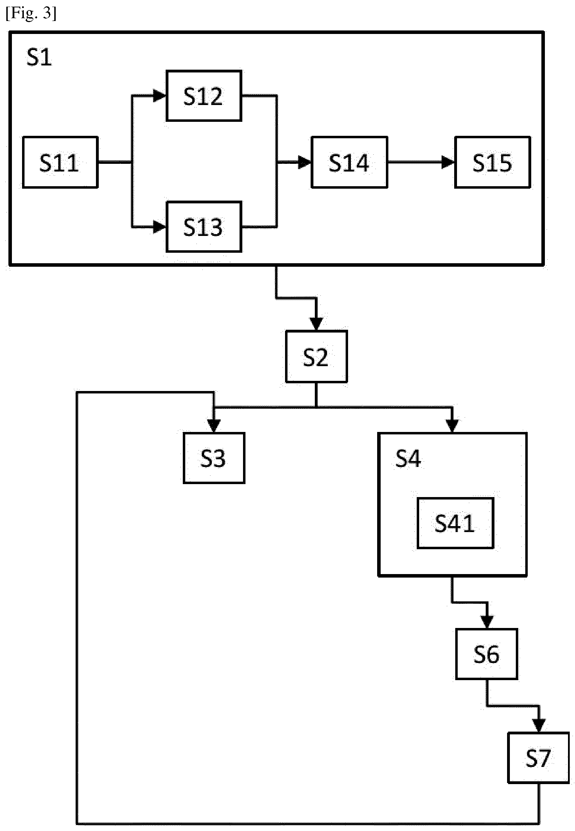

La mémoire 14 du dispositif de contrôle électronique 13 est un support d'enregistrement de données sur lequel est enregistré un programme d'ordinateur comprenant des instructions de code de programme de mise en œuvre d'un procédé de calcul de consignes de fonctionnement du premier moteur 2 et du deuxième moteur 3 selon un mode de réalisation de l'invention. Le microprocesseur 15 est apte à exécuter ce programme d'ordinateur. On décrit à présent un mode de réalisation de ce procédé de calcul en relation avec les figures 2 et 3.

Le procédé de calcul comprend tout d'abord une première étape S1 lors de laquelle on calcule une épaisseur de patine formée en surface des bagues 9. L'épaisseur de patine peut être calculée de manière itérative en fonction d'une épaisseur de patine calculée lors d'une précédente itération de la première étape S1 et en fonction de conditions d'utilisation du deuxième moteur 3. Une valeur initiale de l'épaisseur de patine est alors requise pour initier le procédé. Les conditions d'utilisation du deuxième moteur permettent donc de calculer une variation d'épaisseur de patine.

Dans une première sous-étape S11, on acquiert lesdites conditions d'utilisation. Ces conditions d'utilisations peuvent être fournies de manière directe ou indirecte, par exemple par des capteurs embarqués dans le véhicule. Parmi ces conditions d'utilisation figurent notamment :
- une donnée CU1 relative au régime du deuxième moteur, c'est-à-dire une donnée caractérisant la vitesse de rotation du rotor relativement au stator;
- une donnée CU2 relative à un courant d'excitation du rotor 6 du deuxième moteur 3, notamment la valeur de l'intensité du courant électrique circulant dans le rotor 6; et
- une donnée CU3 relative à une température ambiante, par exemple une température atmosphérique dans l'environnement du véhicule.

Ces trois données CU1, CU2, CU3 sont fournies en entrée d'un modèle thermique MT du deuxième moteur 2. Dans une deuxième sous-étape S12, le modèle thermique MT calcule une température T au niveau d'une interface entre les bagues 9 et les balais 10.

La donnée CU3 relative à la température ambiante est fournie en entrée d'un calculateur d'hygrométrie CH. Dans une troisième sous-étape S13, le calculateur d'hygrométrie CH calcule une hygrométrie absolue H, ou autrement dit un taux d'humidité, au niveau de l'interface entre les bagues 9 et les balais 10. Selon un mode de réalisation de l'invention, ce taux d'humidité peut être calculé sur la seule base de la donnée CU3 relative à la température ambiante. En variante, ce calcul peut être affiné grâce à des données fournies par un capteur d'hygrométrie et/ou par des données météorologiques CU4, par exemple obtenues via un réseau de communication sans fil.

La température T et l'hygrométrie H sont ensuite fournies en entrée d'un calculateur de variation d'épaisseur de patine CdP. Dans une quatrième sous étape S14, ce calculateur CdP calcule alors une variation d'épaisseur de patine dP en fonction de la température T et de l'hygrométrie H. La variation d'épaisseur de patine dP peut être positive si les conditions de fonctionnement du deuxième moteur 2 sont favorables à la régénération de la patine, ou au contraire négative si les conditions de fonctionnement du deuxième moteur 2 sont défavorables. En complément, des données prévisionnelles de navigation (fournies par un système de navigation) pourraient également être exploitées pour faire une estimation de la variation d'épaisseur de patine à la fin de la période d'utilisation du véhicule. Le modèle thermique MT et/ou le calculateur d'hygrométrie et/ou le calculateur CdP peuvent comprendre des cartographies et/ou des fonctions interpolées afin de calculer respectivement la température T, l'hygrométrie H, et la variation d'épaisseur de patine dP.

La variation d'épaisseur de patine dP est ensuite fournie en entrée d'un calculateur d'épaisseur de patine CeP. Dans une cinquième sous-étape S15, le calculateur CeP calcule une épaisseur de patine eP effective en surface des bagues. Ce calcul peut être réalisé en additionnant la variation d'épaisseur de patine dP précédemment calculée à une précédente valeur d'épaisseur de patine, calculée lors d'une précédente itération de l'étape S1. A l'issue de la première étape S1, on dispose donc d'une estimation de l'épaisseur de patine formée à l'instant présent en surface des bagues 9.

Ensuite, dans une deuxième étape S2, on compare l'épaisseur de patine eP précédemment calculée à un premier seuil Se1. Le premier seuil Se1 est de préférence une valeur prédéfinie enregistrée dans la mémoire 14 du dispositif de commande électronique 13. Ce premier seuil peut être défini lors d'une phase de calibration préalable du véhicule. Ensuite, en fonction du résultat de la comparaison de l'épaisseur de patine eP au premier seuil Se1, deux issues sont possibles.

Selon une première issue, si l'épaisseur de patine eP est supérieure ou égale au premier seuil Se1, autrement dit si l'épaisseur de patine est jugée suffisamment importante pour ne pas risquer d'endommager le deuxième moteur 3, on calcule, dans une troisième étape S3, des consignes de fonctionnement du premier moteur et du deuxième moteur selon une première stratégie visant à optimiser la consommation énergétique du véhicule 1. Cette première stratégie peut être conforme à la stratégie de gestion habituelle des véhicules équipés de deux moteurs. En particulier, cette stratégie conduit à ce que seul le premier moteur 2 soit activé si la requête de couple est inférieure ou égale aux capacités du premier moteur, c'est-à-dire à son couple maximum. Dans ce cas, le deuxième moteur n'est donc pas activé et notamment aucun courant électrique ne circule au niveau du dispositif d'alimentation 8. Le rotor 6 du deuxième moteur est néanmoins entraîné en rotation en raison de sa liaison mécanique avec les roues 4B du véhicule. Les balais 10 frottent donc sur les bagues 9 sans passage de courant électrique au niveau de cette interface. Un tel mode de fonctionnement a tendance à faire augmenter la température à l'interface entre les bagues 9 et les balais 10 et donc à dégrader la patine, notamment à réduire son épaisseur. Toutefois cela n'est pas gênant car l'épaisseur de patine eP est suffisante pour supporter un tel mode de fonctionnement, au moins jusqu'à la prochaine itération du procédé. Bien sûr, selon cette première stratégie, le deuxième moteur 3 peut être activé si la requête de couple excède les capacités du premier moteur 2.

Selon une deuxième issue, si l'épaisseur de patine eP est strictement inférieure au premier seuil Se1, on calcule, dans une quatrième étape S4, des consignes de fonctionnement du premier moteur et du deuxième moteur selon une deuxième stratégie, distincte de la première stratégie, et visant à faire circuler un courant électrique dans ledit dispositif d'alimentation pour favoriser la régénération de la patine. Une telle stratégie de fonctionnement ne vise donc pas à optimiser la consommation énergétique du véhicule. Au contraire, cette stratégie de fonctionnement présente un rendement énergétique moins bon que la première stratégie mais présente l'avantage de permettre la régénération de la patine, c'est-à-dire une restauration de la patine en surfaces des bagues 9. En particulier, selon cette deuxième stratégie on force l'activation du deuxième moteur 3 quand bien même la requête de couple est inférieure ou égale aux capacité du premier moteur 2. Le couple requis peut ainsi être fourni conjointement par le premier moteur 2 et le deuxième moteur 3, voire même exclusivement par le deuxième moteur 3. Par conséquent, un courant électrique circule au niveau du dispositif d'alimentation 8, ce qui permet la régénération de la patine.

La troisième étape S3 et la quatrième étape S4 régissent le fonctionnement du premier moteur 2 et du deuxième moteur 3. En particulier, les étapes S3 et S4 peuvent comprendre le calcul de requêtes de couple pour chacun des moteurs 2 et 3. Sur la figure 2, ces requêtes de couple sont indiquées, pour la première stratégie, par les références RC1_M1 et RC1_M2, respectivement pour le premier moteur et pour le deuxième moteur. Pour la deuxième stratégie, les requêtes de couple sont indiquées respectivement par les références RC2_M1 et RC2_M2. Alternativement, ces étapes peuvent aussi comprendre le calcul de toute grandeur liée à une requête de couple, comme par exemple le calcul d'une intensité et/ou d'une tension d'un courant électrique de commande des moteurs 2 et 3.

Pour la première stratégie comme pour la deuxième stratégie, les ordres de commande des moteurs 2 et 3 peuvent être pondérés par des impératifs de stabilité dynamique du véhicule. En particulier, si la requête de couple est trop importante par rapport aux conditions d'adhérence du véhicule sur la route, celle-ci peut être dans tous les cas limitée pour éviter une perte de contrôle du véhicule.

La consigne de couple RC2_M2 du deuxième moteur électrique, si l'épaisseur de patine est strictement inférieure au premier seuil Se1, peut être égale au minimum entre :
- un couple requis d'entraînement du véhicule, notamment une consigne de couple exprimée par un conducteur du véhicule par un appui sur une pédale d'accélérateur
- un couple maximum qu'est capable de fournir le deuxième moteur électrique, et
- un couple maximum permettant de conserver une trajectoire stable du véhicule.

Ainsi, si le couple requis est inférieur ou égal au couple maximum qu'est capable de fournir le deuxième moteur électrique 3, alors seulement le deuxième moteur est activé de manière à produire le couple requis, pour autant que les conditions d'adhérence du véhicule sur le sol soient suffisantes pour garantir une trajectoire stable. Si le couple requis est strictement supérieur au couple maximum qu'est capable de fournir le deuxième moteur électrique 3, alors le deuxième moteur est activé à sa puissance maximale et la différence de couple entre le couple requis et la couple maximal du deuxième moteur est alors fournie par le premier moteur.

De même, la consigne de couple RC1_M1 du premier moteur électrique, si l'épaisseur de patine est supérieure ou égale au premier seuil Se1, peut être égale au minimum entre :
- le couple requis d'entraînement du véhicule, notamment la consigne de couple exprimée par un conducteur du véhicule par un appui sur la pédale d'accélérateur
- un couple maximum qu'est capable de fournir le premier moteur électrique, et
- un couple maximum permettant de conserver une trajectoire stable du véhicule.

Si le couple requis est strictement supérieur au couple maximum qu'est capable de fournir le premier moteur électrique 2, alors le premier moteur est activé à sa puissance maximale et la différence de couple entre le couple requis et la couple maximal du premier moteur est alors fournie par le deuxième moteur.

Dans l'hypothèse où le premier moteur et le deuxième moteur contrôlent des essieux différents, comme c'est le cas dans le mode de réalisation présenté, le choix de l'une ou l'autre stratégie conduit à déplacer la fonction motrice du véhicule d'un essieu à l'autre. Ce déplacement peut être imperceptible ou légèrement perceptible pour les usagers du véhicule. Avantageusement, pour éviter un changement trop fréquent de stratégie, le procédé peut comprendre un cycle d'hystérésis. Plus précisément, le procédé peut comprendre, consécutivement à l'étape S4, une cinquième étape S5 de calcul d'une deuxième épaisseur de patine eP2 formée en surface de ladite au moins une bague consécutivement à une période de fonctionnement du deuxième moteur selon la deuxième stratégie. Ce calcul peut notamment être mis en œuvre par un calculateur d'épaisseur de patine CeP2, identique ou analogue au calculateur d'épaisseur de patine CeP précédemment décrit. Notamment, le calcul de la deuxième épaisseur de patine eP2 peut être basé sur la consigne de couple RC2_M2 précédemment transmise au deuxième moteur. Ensuite, dans une sixième étape S6, la deuxième épaisseur de patine eP2 est comparée à un deuxième seuil Se2 strictement supérieur au premier seuil Se1. Si l'épaisseur de patine est strictement supérieure au deuxième seuil Se2, c'est-à-dire si la patine en surface des bagues 9 est suffisamment régénérée, on peut calculer les consignes de fonctionnement du premier moteur et du deuxième moteur selon la première stratégie, conformément à la troisième étape S3. Inversement, si l'épaisseur de patine est inférieure ou égale au deuxième seuil Se2, c'est-à-dire si la patine en surface des bagues 9 est insuffisamment régénérée, on peut calculer les consignes de fonctionnement du premier moteur et du deuxième moteur selon la deuxième stratégie, conformément à la troisième étape S3.

Selon un autre perfectionnement de l'invention, la quatrième étape S4 peut comprendre une sous-étape E41 lors de laquelle on calcule un courant d'alimentation du rotor et un courant d'alimentation d'un stator du deuxième moteur pour favoriser la régénération de la patine au détriment du rendement du deuxième moteur. Autrement dit, il s'agit de définir des courants d'alimentation du rotor et du stator qui ne visent pas un optimum énergétique ou un rendement optimal du deuxième moteur 3 mais plutôt un fonctionnement du deuxième moteur permettant d'accélérer encore la régénération de la patine. En effet, le fonctionnement du deuxième moteur 3 est contrôlé par des courants d'alimentation du rotor et du stator. Ces courant d'alimentation sont généralement définis selon un certain équilibre par une cartographie propre au deuxième moteur, afin de faire fonctionner le deuxième moteur avec le meilleur rendement possible. Cette cartographie comprend un ensemble de paramètres dont les valeurs sont préétablies lors d'une phase de mise au point du moteur. Le perfectionnement de l'invention propose ici d'implémenter une deuxième cartographie du deuxième moteur, distincte de la première cartographie, dont l'objectif n'est pas de viser un rendement optimal mais plutôt une meilleure régénération de la patine. Ceci peut être obtenu par exemple en modifiant un équilibre entre le courant d'alimentation du rotor et le courant d'alimentation du stator. L'avantage de ce perfectionnement est de permettre une régénération encore plus efficace de la patine, toutefois il requiert une deuxième mise au point du moteur ainsi que des ressources de calcul et de mémoire suffisantes pour sa mise en œuvre.

La sous-étape S41 peut être mise en œuvre lorsque l'épaisseur de patine eP précédemment calculée est strictement inférieure à un troisième seuil. Selon une première option, ce troisième seuil peut être égal au premier seuil Se1. Ainsi la sous-étape S41 est mise en œuvre systématiquement dès que l'épaisseur de patine est strictement inférieure au premier seuil Se1. Le procédé de calcul reste ainsi assez simple à mettre en œuvre. Alternativement, selon une deuxième option, ce troisième seuil peut être strictement inférieur au premier seuil Se1. Ainsi, la sous-étape S41 est mise en œuvre seulement si le pilotage du deuxième moteur avec des courants d'alimentation du rotor et du stator visant un optimum énergétique ne suffit pas pour régénérer la patine. Ainsi cette deuxième option qui dégrade le rendement du deuxième moteur n'est mise en œuvre qu'en dernier ressort.

Finalement, grâce à l'invention, on s'assure que l'épaisseur de patine du deuxième moteur ne devient jamais trop faible ce qui pourrait conduire à une destruction du deuxième moteur. La fiabilité du deuxième moteur est donc améliorée. Quand bien même le véhicule fonctionne parfois selon un mode de fonctionnement différent du mode de fonctionnement permettant un rendement optimal, le bilan énergétique est favorable car le véhicule est plus durable. De plus, le procédé de calcul proposé est simple à mettre en œuvre et requiert des ressources de calcul limitées. L'invention pourra avantageusement être appliquée à tout véhicule de transport comprenant deux moteurs dont au moins un moteur est un moteur électrique synchrone à rotor bobiné.

## Revendications

1. Procédé de calcul de consignes de fonctionnement d'un premier moteur (2) et d'un deuxième moteur (3) d'un même véhicule (1), le deuxième moteur (3) étant un moteur électrique comprenant un rotor (6) et un dispositif d'alimentation (8) électrique du rotor, le dispositif d'alimentation comprenant au moins une bague (9) et au moins un balai (10) frottant sur l'au moins une bague, le procédé de calcul **caractérisé en ce qu'**il comprend :
- une étape (S1) de calcul d'une épaisseur d'une patine (eP) formée en surface de ladite au moins une bague, puis
- une étape (S2) de comparaison de l'épaisseur de patine à un premier seuil (Se1), puis
- si l'épaisseur de patine est supérieure ou égale au premier seuil, une étape (S3) de calcul des consignes (RC1_M1, RC1_M2) de fonctionnement du premier moteur et du deuxième moteur selon une première stratégie visant à optimiser la consommation énergétique du véhicule, et
- si l'épaisseur de patine est strictement inférieure au premier seuil, une étape (S4) de calcul des consignes (RC2_M1, RC2_M2) de fonctionnement du premier moteur et du deuxième moteur selon une deuxième stratégie, distincte de la première stratégie, et visant à faire circuler un courant électrique dans ledit dispositif d'alimentation pour favoriser la régénération de la patine.

2. Procédé de calcul selon la revendication précédente, **caractérisé en ce que** ladite étape (S4) de calcul des consignes de fonctionnement du premier moteur et du deuxième moteur selon la deuxième stratégie comprend le calcul d'une consigne de couple du deuxième moteur (3), la consigne de couple étant égale au minimum entre :
- un couple requis d'entraînement du véhicule,
- un couple maximum qu'est capable de fournir le deuxième moteur électrique, et
- un couple maximum permettant de conserver une trajectoire stable du véhicule.

3. Procédé de calcul selon l'une des revendications précédentes, **caractérisé en ce que** l'épaisseur de patine (eP) est calculée de manière itérative en fonction d'une épaisseur de patine calculée lors d'une précédente itération de l'étape de calcul de l'épaisseur de patine, et en fonction d'une variation d'épaisseur de patine (deP) elle-même calculée en fonction de conditions d'utilisation (CU1, CU2, CU3, CU4) du deuxième moteur (3).

4. Procédé de calcul selon la revendication précédente, **caractérisé en ce que** lesdites conditions d'utilisation du deuxième moteur (3) comprennent :
- une donnée (CU1) relative au régime du deuxième moteur,
- une donnée (CU2) relative à un courant d'excitation du rotor du deuxième moteur, et
- une donnée (CU3) relative à une température ambiante.

5. Procédé de calcul selon l'une des revendications précédentes, **caractérisé en ce que** l'étape (S1) de calcul de l'épaisseur de patine comprend :
- une sous-étape (S12) de calcul d'une température (T) au niveau d'une interface entre l'au moins une bague (9) et l'au moins un balais (10) et/ ou
- une sous-étape (S13) de calcul d'une hygrométrie (H) au niveau d'une interface entre l'au moins une bague (9) et l'au moins un balais (10).

6. Procédé de calcul selon l'une des revendications précédentes, **caractérisé en ce que** le premier moteur (2) est configuré pour entraîner des roues avant (4A) du véhicule, et **en ce que** le deuxième moteur (3) est configuré pour entraîner des roues arrière (4B) du véhicule.

7. Procédé de calcul selon l'une des revendications précédentes, **caractérisé en ce qu'**il comprend, consécutivement à l'étape (S4) de calcul des consignes de fonctionnement du premier moteur et du deuxième moteur selon la deuxième stratégie :
- une étape (S5) de calcul d'une deuxième épaisseur de patine (eP2) formée en surface de ladite au moins une bague (9) consécutivement à une période de fonctionnement du deuxième moteur (3) selon la deuxième stratégie
- une étape (S6) de comparaison de la deuxième épaisseur de patine à un deuxième seuil (Se2) strictement supérieur au premier seuil (Se1), puis
- si la deuxième épaisseur de patine (eP2) est strictement supérieure au deuxième seuil, une étape (S3) de calcul des consignes de fonctionnement du premier moteur et du deuxième moteur selon la première stratégie.

8. Procédé de calcul selon l'une des revendications précédentes, caractérisé en que ladite étape (S4) de calcul des consignes de fonctionnement du premier moteur et du deuxième moteur selon la deuxième stratégie comprend, si l'épaisseur de patine (eP) est strictement inférieure à un troisième seuil, une étape de calcul d'un courant d'alimentation du rotor (6) et d'un courant d'alimentation d'un stator (5) du deuxième moteur pour favoriser la régénération de la patine au détriment du rendement du deuxième moteur.

9. Procédé de calcul selon la revendication précédente, **caractérisé en ce que** le troisième seuil est égal au premier seuil (Se1), ou **en ce que** le troisième seuil est strictement inférieur au premier seuil (Se1).

10. Véhicule (1) automobile comprenant un premier moteur (2) et un deuxième moteur (3), le deuxième moteur étant un moteur électrique comprenant un rotor (6) et un dispositif d'alimentation (8) électrique du rotor, le dispositif d'alimentation comprenant au moins une bague (9) et au moins un balai (10) frottant sur l'au moins une bague, le véhicule comprenant en outre des moyens matériels et logiciels (13, 14, 15, 16) configurés pour mettre en œuvre le procédé de calcul selon l'une des revendications précédentes.

## Patentansprüche

1. Verfahren zur Berechnung von Betriebssollwerten eines ersten Motors (2) und eines zweiten Motors (3) desselben Fahrzeugs (1), wobei der zweite Motor (3) ein Elektromotor ist, der einen Rotor (6) und eine elektrische Versorgungsvorrichtung (8) für den Rotor umfasst, wobei die Versorgungsvorrichtung, mindestens einen Ring (9) und mindestens eine Bürste (10), die an dem mindestens einen Ring reibt, umfasst, wobei das Verfahren zur Berechnung **dadurch gekennzeichnet ist, dass** es umfasst:
- einen Schritt (S1) des Berechnens einer Dicke einer Patina (eP), die an der Oberfläche des mindestens einen Rings gebildet ist, dann
- einen Schritt (S2) des Vergleichens der Patinadicke mit einem ersten Schwellenwert (Se1), dann
- wenn die Patinadicke größer oder gleich dem ersten Schwellenwert ist, einen Schritt (S3) des Berechnens der Betriebssollwerte (RC1_M1, RC1_M2) des ersten Motors und des zweiten Motors gemäß einer ersten Strategie, die darauf abzielt, den Energieverbrauch des Fahrzeugs zu optimieren, und
- wenn die Patinadicke strikt kleiner als der erste Schwellenwert ist, einen Schritt (S4) des Berechnens der Betriebssollwerte (RC2_M1, RC2_M2) des ersten Motors und des zweiten Motors gemäß einer zweiten Strategie, die sich von der ersten Strategie unterscheidet und darauf abzielt, einen elektrischen Strom in der Versorgungsvorrichtung fließen zu lassen, um die Regeneration der Patina zu fördern.

2. Verfahren zur Berechnung nach dem vorhergehenden Anspruch, **dadurch gekennzeichnet, dass** der Schritt (S4) des Berechnens der Betriebssollwerte des ersten Motors und des zweiten Motors gemäß der zweiten Strategie das Berechnen eines Drehmomentsollwerts des zweiten Motors (3) umfasst, wobei der Drehmomentsollwert gleich dem Minimum ist zwischen:
- einem geforderten Antriebsdrehmoment des Fahrzeugs,
- einem maximalen Drehmoment, das abzugeben der zweite Elektromotor in der Lage ist, und
- einem maximalen Drehmoment, das es ermöglicht, eine stabile Trajektorie des Fahrzeugs aufrechtzuerhalten.

3. Verfahren zur Berechnung nach einem der vorhergehenden Ansprüche, **dadurch gekennzeichnet, dass** die Patinadicke (eP) iterativ berechnet wird in Abhängigkeit von einer bei einer vorhergehenden Iteration des Schritts zum Berechnen der Patinadicke berechneten Patinadicke und in Abhängigkeit von einer Patinadickenänderung (deP), die wiederum in Abhängigkeit von den Verwendungsbedingungen (CU1, CU2, CU3, CU4) des zweiten Motors (3) berechnet wird.

4. Verfahren zur Berechnung nach dem vorhergehenden Anspruch, **dadurch gekennzeichnet, dass** die Verwendungsbedingungen des zweiten Motors (3) umfassen:
- ein Datenelement (CU1) bezüglich der Drehzahl des zweiten Motors,
- ein Datenelement (CU2) bezüglich eines Erregerstroms des Rotors des zweiten Motors, und
- ein Datenelement (CU3) bezüglich einer Umgebungstemperatur.

5. Verfahren zur Berechnung nach einem der vorhergehenden Ansprüche, **dadurch gekennzeichnet, dass** der Schritt (S1) des Berechnens der Patinadicke umfasst:
- einen Teilschritt (S12) des Berechnens einer Temperatur (T) an einer Grenzfläche zwischen dem mindestens einen Ring (9) und der mindestens einen Bürste (10) und/oder
- einen Teilschritt (S13) des Berechnens einer Luftfeuchtigkeit (H) an einer Grenzfläche zwischen dem mindestens einen Ring (9) und der mindestens einen Bürste (10).

6. Verfahren zur Berechnung nach einem der vorhergehenden Ansprüche, **dadurch gekennzeichnet, dass** der erste Motor (2) dazu ausgebildet ist, Vorderräder (4A) des Fahrzeugs anzutreiben, und dass der zweite Motor (3) dazu ausgebildet ist, Hinterräder (4B) des Fahrzeugs anzutreiben.

7. Verfahren zur Berechnung nach einem der vorhergehenden Ansprüche, **dadurch gekennzeichnet, dass** es nach dem Schritt (S4) zum Berechnen der Betriebssollwerte des ersten Motors und des zweiten Motors gemäß der zweiten Strategie umfasst:
- einen Schritt (S5) des Berechnens einer zweiten Patinadicke (eP2), die an der Oberfläche des mindestens einen Rings (9) nach einer Betriebszeit des zweiten Motors (3) gebildet wurde, gemäß der zweiten Strategie
- einen Schritt (S6) des Vergleichens der zweiten Patinadicke mit einem zweiten Schwellenwert (Se2), der strikt größer als der erste Schwellenwert (Se1) ist, dann
- wenn die zweite Patinadicke (eP2) strikt größer als der zweite Schwellenwert ist, einen Schritt (S3) des Berechnens der Betriebssollwerte des ersten Motors und des zweiten Motors gemäß der ersten Strategie.

8. Verfahren zur Berechnung nach einem der vorhergehenden Ansprüche, **dadurch gekennzeichnet, dass** der Schritt (S4) des Berechnens der Betriebssollwerte des ersten Motors und des zweiten Motors gemäß der zweiten Strategie, wenn die Patinadicke (EP) strikt kleiner als ein dritter Schwellenwert ist, einen Schritt des Berechnens eines Versorgungsstroms des Rotors (6) und eines Versorgungsstroms eines Stators (5) des zweiten Motors umfasst, um die Regeneration der Patina zulasten des Wirkungsgrads des zweiten Motors zu fördern.

9. Verfahren zur Berechnung nach dem vorhergehenden Anspruch, **dadurch gekennzeichnet, dass** der dritte Schwellenwert gleich dem ersten Schwellenwert (Se1) ist oder dass der dritte Schwellenwert strikt kleiner als der erste Schwellenwert (Se1) ist.

10. Kraftfahrzeug (1), das einen ersten Motor (2) und einen zweiten Motor (3) umfasst, wobei der zweite Motor ein Elektromotor ist, der einen Rotor (6) und eine elektrische Versorgungsvorrichtung (8) für den Rotor umfasst, wobei die Versorgungsvorrichtung mindestens einen Ring (9) und mindestens eine Bürste (10), die an dem mindestens einen Ring reibt, umfasst, wobei das Fahrzeug ferner Hardware- und Softwaremittel (13, 14, 15, 16) aufweist, die dazu ausgebildet sind, das Verfahren zur Berechnung nach einem der vorhergehenden Ansprüche durchzuführen.

## Claims

1. Method for computing operational settings of a first motor (2) and second motor (3) of the same vehicle (1), the second motor (3) being an electric motor comprising a rotor (6) and an electric device (8) for energizing the rotor, the energizing device comprising at least one ring (9) and at least one brush (10) rubbing on the at least one ring, the computing method **characterized in that** it comprises:
- a step (S1) of computing a thickness (eP) of a patina formed on the surface of said at least one ring, then
- a step (S2) of comparing the patina thickness to a first threshold (Se1), then
- if the patina thickness is greater than or equal to the first threshold, a step (S3) of computing the operational settings (RC1_M1, RC1_M2) of the first motor and second motor according to a first strategy aiming to optimize the power consumption of the vehicle, and
- if the patina thickness is strictly less than the first threshold, a step (S4) of computing the operational settings (RC2_M1, RC2_M2) of the first motor and second motor according to a second strategy, distinct from the first strategy, and aiming to make an electrical current flow through said energizing device with a view to promoting regeneration of the patina.

2. Computing method according to the preceding claim, **characterized in that** said step (S4) of computing the operational settings of the first motor and second motor according to the second strategy comprises computing a torque setting of the second motor (3), the torque setting being equal to the minimum between:
- a required drive torque of the vehicle,
- a maximum torque that the second electric motor is capable of delivering, and
- a maximum torque allowing a stable vehicle path to be maintained.

3. Computing method according to either of the preceding claims, **characterized in that** the patina thickness (eP) is computed iteratively depending on a patina thickness computed in a previous iteration of the step of computing patina thickness, and depending on a variation (deP) in patina thickness itself computed depending on conditions of use (CU1, CU2, CU3, CU4) of the second motor (3).

4. Computing method according to the preceding claim, **characterized in that** said conditions of use of the second motor (3) comprise:
- a datum (CU1) relating to the speed of the second motor,
- a datum (CU2) relating to an excitation current of the rotor of the second motor, and
- a datum (CU3) relating to an ambient temperature.

5. Computing method according to any of the preceding claims, **characterized in that** the step (S1) of computing the patina thickness comprises:
- a substep (S12) of computing a temperature (T) at an interface between the at least one ring (9) and the at least one brush (10), and/or
- a substep (S13) of computing a humidity (H) at an interface between the at least one ring (9) and the at least one brush (10).

6. Computing method according to any of the preceding claims, **characterized in that** the first motor (2) is configured to drive front wheels (4A) of the vehicle, and **in that** the second motor (3) is configured to drive rear wheels (4B) of the vehicle.

7. Computing method according to any of the preceding claims, **characterized in that** it comprises, consecutively to the step (S4) of computing the operational settings of the first motor and second motor according to the second strategy:
- a step (S5) of computing a second patina thickness (eP2) formed on the surface of said at least one ring (9) consecutively to a period of operation of the second motor (3) according to the second strategy,
- a step (S6) of comparing the second patina thickness to a second threshold (Se2) strictly greater than the first threshold (Se1), then
- if the second patina thickness (eP2) is strictly greater than the second threshold, a step (S3) of computing the operational settings of the first motor and second motor according to the first strategy.

8. Computing method according to any of the preceding claims, **characterized in that** said step (S4) of computing the operational settings of the first motor and second motor according to the second strategy comprises, if the patina thickness (eP) is strictly less than a third threshold, a step of computing an energization current of the rotor (6) and an energization current of a stator (5) of the second motor with a view to promoting regeneration of the patina at the expense of the efficiency of the second motor.

9. Computing method according to the preceding claim, **characterized in that** the third threshold is equal to the first threshold (Se1), or **in that** the third threshold is strictly less than the first threshold (Se1).

10. Motor vehicle (1) comprising a first motor (2) and a second motor (3), the second motor being an electric motor comprising a rotor (6) and an electric device (8) for energizing the rotor, the energizing device comprising at least one ring (9) and at least one brush (10) rubbing on the at least one ring, the vehicle further comprising hardware and software means (13, 14, 15, 16) configured to implement the computing method according to any of the preceding claims.
